# EUROPEAN PATENT SPECIFICATION

(11) **EP 0 296 745 B1**
(45) Date of publication and mention of the grant of the patent: **07.12.1994**
(21) Application number: 88305372.0
(22) Date of filing: 13.06.1988
(51) Int. Cl.: C07D 249/08, C07F 7/08, C07D 405/06, C07B 35/08

(54) **Process for the isomerization of symmetric triazoles to unsymmetric triazoles**
Verfahren zur Isomerierung von symmetrischen Triazolen zu unsymmetrischen Triazolen
Procédé pour l'isomérisation de triazoles symmétriques à triazoles assymétriques

(30) Priority: 16.06.1987 US 62619
(43) Date of publication of application: 28.12.1988
(73) Proprietor: E.I. DU PONT DE NEMOURS AND COMPANY, Wilmington Delaware 19898 (US)
(72) Inventor: Barnum, Christopher Scott, Newark Delaware 19711 (US); Olson, Richard Eric, Wilmington Delaware 19809 (US); Moberg, William Karl, Wilmington Delaware 19810 (US)
(74) Representative: Hildyard, Edward Martin

(56) References cited:
- EP-A- 0 068 813
- EP-A- 0 085 842
- EP-A- 0 143 379
- EP-A- 0 143 384

## Description

### Background of the Invention

C. Temple and J. A. Montgomery, Triazoles, Vol. 37 of Heterocyclic Compounds, A. Weissberger and E. C. Taylor (eds.), J. Wiley and Sons, New York, NY, 1981, p. 5, reviews the alkylation of 1,2,4-triazoles to give mixtures of unsymmetrical (major) and symmetrical (minor) alkyltriazoles.

U.S. Patents 4,530,922 and 4,510,136 disclose the preparation of mixtures of isomeric 1,2,4-triazolyl methylsilanes in which the unsymmetrical isomer pre- dominates.

EP-A-0,143,384 (Bayer) discloses the production of β-hydroxyalkyl-1,2,4-triazoles from β-hydroxyalkyl- 1,3,4-triazoles by heating the symmetrical isomers with base in polar-aprotic solvents.

EP-A-143,379 (Bayer) discloses the production of a class of β-hydroxyalkyl-1,2,4-triazoles from appropriate oxiranes without concurrent symmetrical triazole formation in the presence of base and cyclic amides.

Lee et al., J. Org. Chem., 37(3), 343-347 (1972), discloses the pyrolysis of 1,3,4,5-tetraalkyl-1,2,4-triazolium iodides to afford unsymmetrical 3,4,5-trialkyl-1,2,4-triazoles.

The process of this application does not require the presence of a base, a polar aprotic solvent or a cyclic amide.

### Summary of the Invention

This invention comprises a process (Equation 1) for the isomerization of a symmetric 4H-1,2,4-triazole of Formula I to an unsymmetric 1H-1,2,4-triazole of Formula II in the presence of an isomerizing agent of Formula III.

### Equation 1

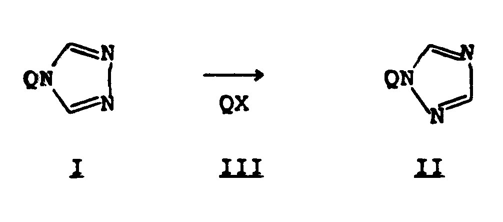

wherein

- Q: is an optionally substituted radical of up to about 35 carbon atoms bonded to the triazole or to X through a carbon atom; and
- X: is Cl, Br or I;
provided that
(a) the carbon atom of Q bonded to the nitrogen atom of the triazole or to X is fully saturated and is substituted by at least one hydrogen atom;
(b) heteroatom substituents on the carbon atom of Q bonded to the nitrogen atom of the triazole or to X are limited to one oxygen radical so as to form an ether linkage or one silicon radical;
(c) when a substituent of the carbon atom of Q bonded to the nitrogen atom of the triazole or to X is an oxygen radical, then the other substituent of the carbon atom of Q bonded to the nitrogen atom of the triazole or to X is bonded to said carbon through a carbonyl group; and
(d) substituents on the silicon radical are bonded to the silicon through oxygen or carbon.

Nonlimiting examples of Q are the radicals of antifungal, antimyotic or microbicidal 1H-1,2,4-triazoles including the following:

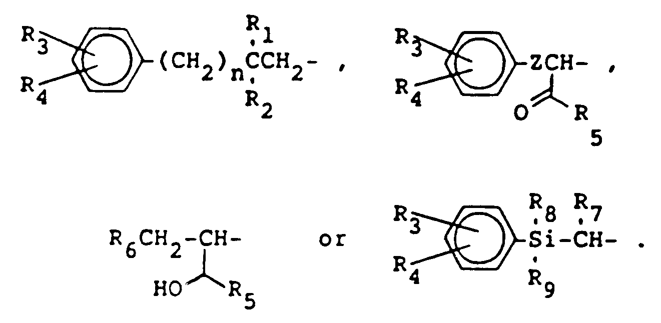

In the above examples of Q,
- R₁: is C₁-C₄ alkyl, OR₁₁ or CN;
- R₂: is H, C₁-C₄ alkyl, C₃-C₆ cycloalkyl, C₄-C₆ cycloalkylalkyl, 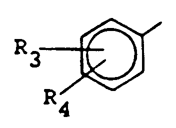 or R₁ and R₂ taken together may be a ketal bridge 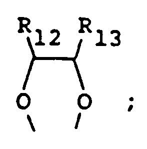
- R₃: is halogen or phenyl;
- R₄: is H or halogen;
- R₅: is C₁-C₄ alkyl;
- R₆: is C₅-C₇ alkylcarbonyl or 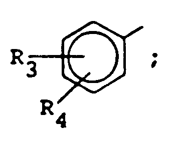
- R₇: is H or CH₃;
- R₈: and R₉ are independently C₁-C₄ alkyl, 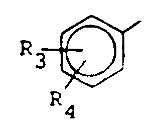 or OR₁₀ ;
- R₁₀: is H or C₁-C₄ alkyl;
- R₁₁: is H, C₁-C₄ alkyl or C₂-C₄ alkenyl;
- R₁₂: and R₁₃ are independently H or C₁-C₄ alkyl;
- n: is 0, 1 or 2; and
- Z: is O or CH₂.

Q is generally a radical of up to about 25 carbon atoms, usually up to about 20 carbon atoms, preferably between about 10 and about 20 carbon atoms.

### Preferred O radicals include

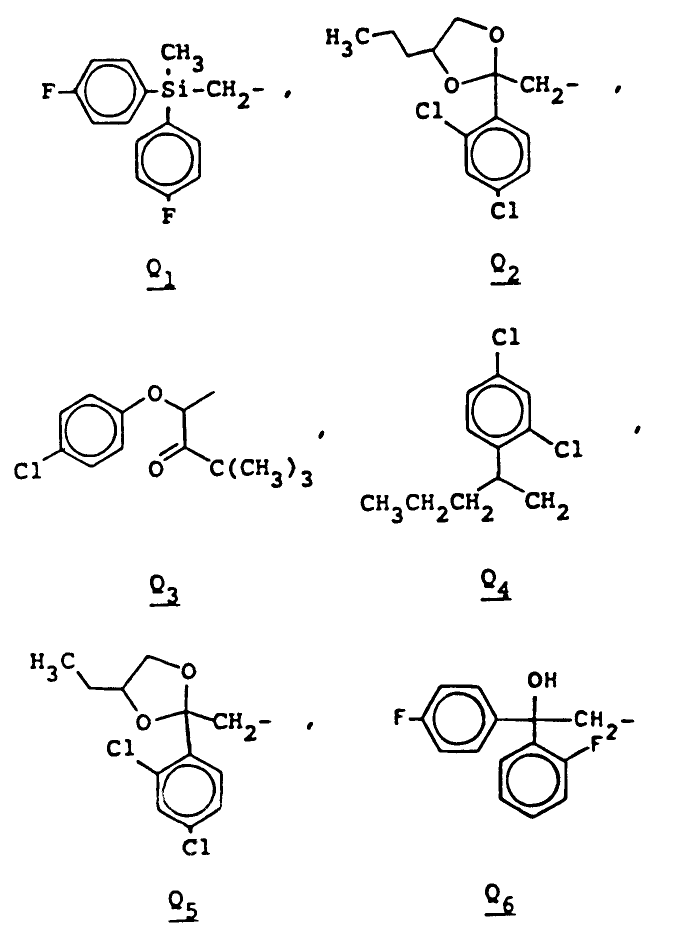

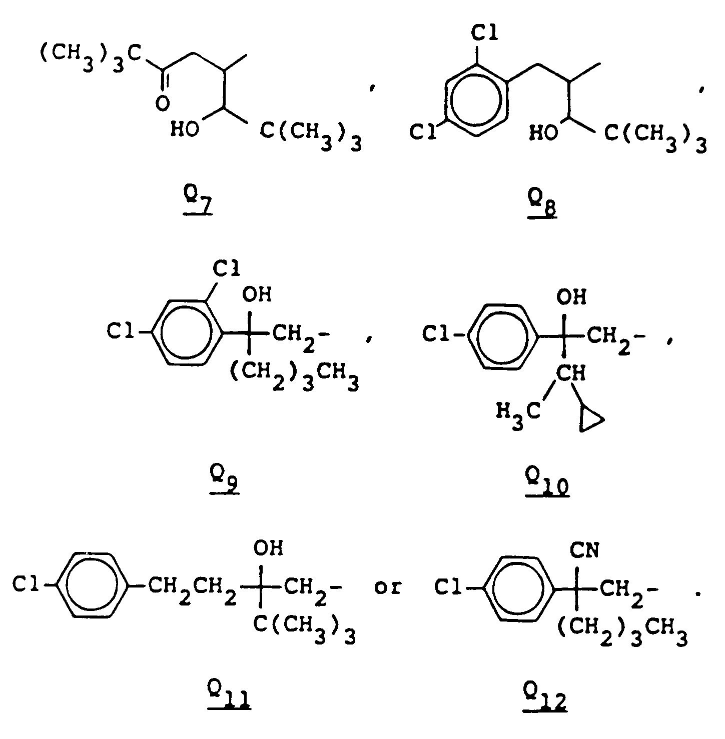

In an especially preferred embodiment of the invention, one or more of the following are present:
(1) Q is not substituted by a hydroxyl group.
(2) The carbon atom of Q bonded to the nitrogen atom of the triazole or to X is substituted by at least two hydrogen atoms.
(3) Q is Q₁.
(4) X is Br or I.

The isomerizing agent should be present in a concentration of at least about 1 mole %, usually about 1-20 mole %, preferably about 2-10 mole %, especially, about 6 mole %.

The process is generally conducted at elevated temperatures, for example, the range of 100°-300°C, usually 100°-250°C and preferably 140°-200°C.

Preferred reaction media include N,N-dimethylformamide, toluene, xylene, ortho-dichlorobenzene or methylethyl ketone, especially, xylene.

In one embodiment of the invention, the isomerizing agent of Formula III is formed in situ by initially introducing into the reaction media a compound of the Formulae IV, V or VI different from the compound of Formula III 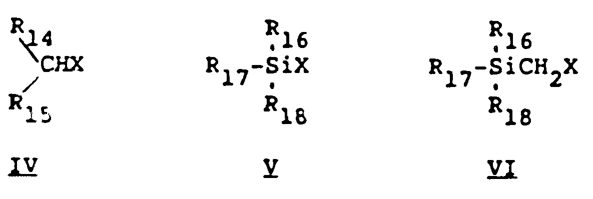
wherein
- R₁₄ and R₁₅: are independently H, C₁-C₆ alkyl, C₂-C₆ alkylcarbonyl, C₂-C₆ alkoxycarbonyl, 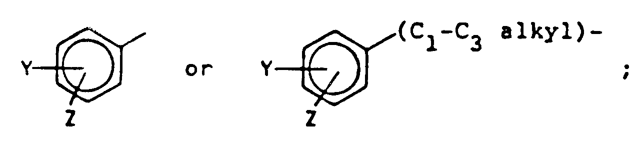
- R₁₆, R₁₇ and R₁₈: are independently C₁-C₆ alkyl, 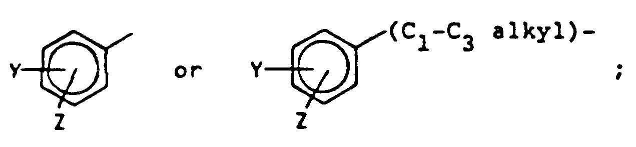
- Y and Z: are independently H, F, Cl, Br, I, C₁-C₃ alkyl, C₁-C₃ haloalkyl, C₁-C₃ alkoxy, C₁-C₃ haloalkoxy, C₁-C₃ alkyl S(O)ₘ, C₁-C₃ haloalkyl S(O)ₘ, NO₂, CN or phenyl; and
- m: is 0, 1 or 2.

In the isomerization of compounds of Formula I where Q is substituted by a hydroxy group, under the conditions for in situ generation of the isomerizing agent of Formula III, use of a compound of Formula IV or VI is preferred.

This invention also comprises a process (Equation 2) for the conversion of a symmetric 4H-1,2,4-triazole of Formula VII to an unsymmetric 1H-1,2,4-triazole of Formula VIII in the presence of an oxirane, L.

### Equation 2

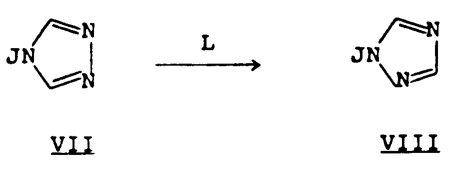

wherein
- J: is an optionally substituted radical of up to about 35 carbon atoms bonded to the triazole through a carbon atom;
provided that
(a) the carbon atom of J bonded to the nitrogen atom of the triazole is fully saturated and is substituted by at least one hydrogen atom and an optionally substituted carbinol radical;
(b) substituents on the carbinol radical are selected from the group consisting of hydrogen or a radical bonded through a carbon atom;
(c) the remaining substituent on the carbon atom of J bonded to the nitrogen atom of the triazole is selected from either a second hydrogen atom or an optionally substituted radical bonded through a carbon atom;
(d) when the remaining substituent on the carbon atom of J bonded to the nitrogen atom of the triazole is other than a second hydrogen atom, then at least one of the substituents of the carbinol carbon is a hydrogen atom; and

- L: is the corresponding oxirane derivative of the radical J where the epoxide ether linkage is formed between the carbinol hydroxyl group of J and the carbon atom of J otherwise bonded to the nitrogen atom of the triazole.

Nonlimiting examples of J are the radicals of antifungal, antimycotic or microbicidal 1H-1,2,4-triazole carbinols including the following: 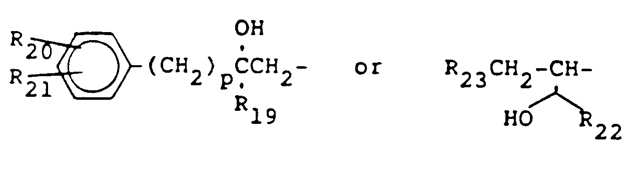
In the above examples of J,
- R₁₉: is H, C₁-C₄ alkyl, C₃-C₆ cycloalkyl C₄-C₆ cycloalkylalkyl, or 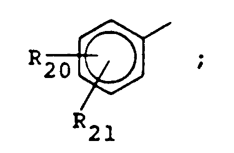
- R₂₀: is halogen or phenyl;
- R₂₁: is H or halogen;
- R₂₂: is C₁-C₄ alkyl;
- R₂₃: is 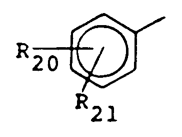 or C₅-C₇ alkylcarbonyl; and
- p: is 0, 1 or 2.

J is generally a radical of up to about 25 carbon atoms, usually up to about 20 carbon atoms, preferably between about 10 and about 20 carbon atoms.

Preferred J radicals and the corresponding oxiranes L include

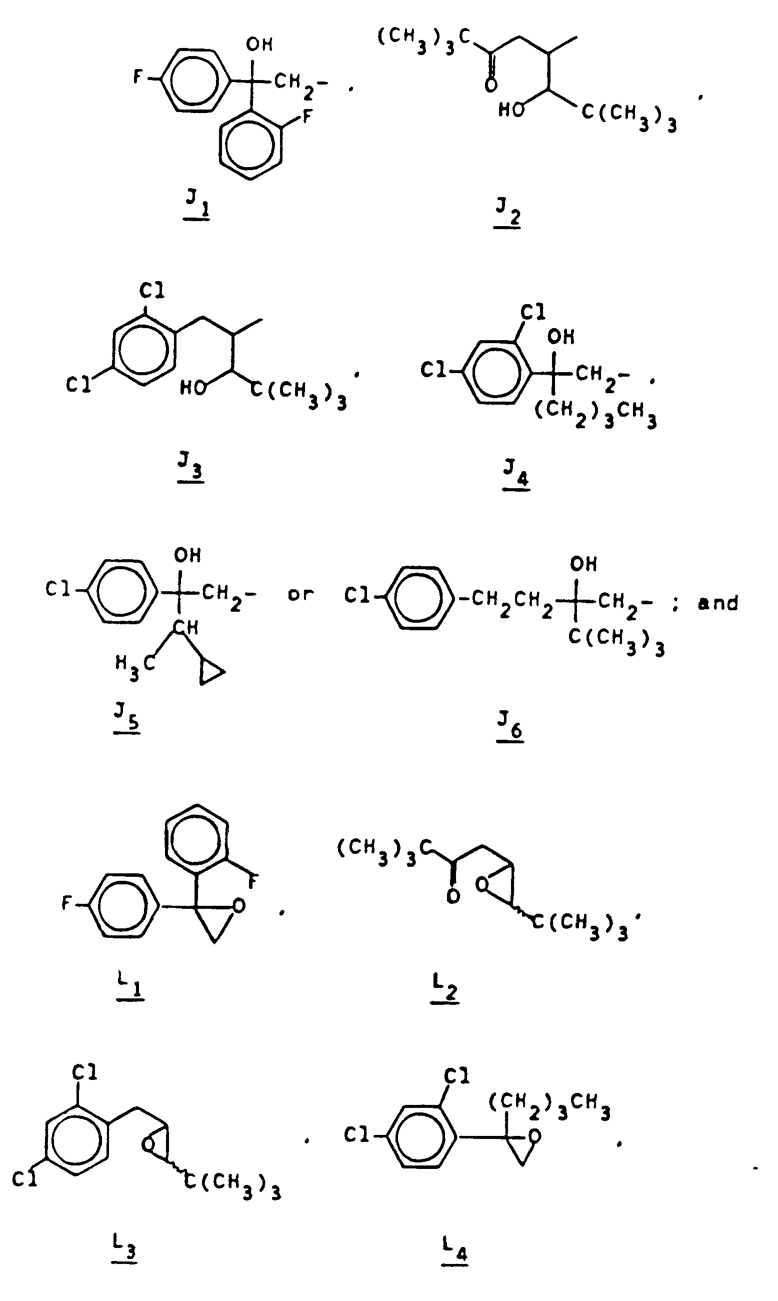

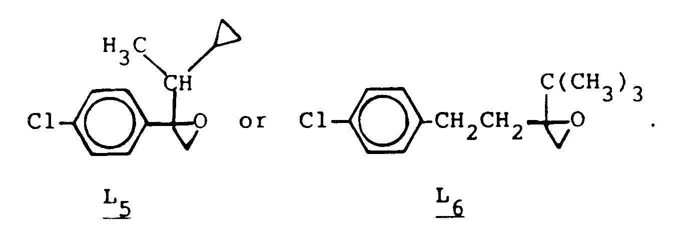

In one embodiment of the invention, the oxirane L is formed in situ by initially introducing into the reaction media a compound of Formula IX different from the oxirane L, 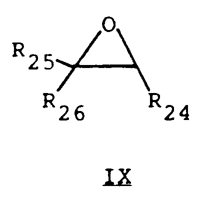
wherein
- R₂₄: is H, C₁-C₂ alkyl, C₂-C₆ alkylcarbonyl;
- R₂₅ and R₂₆: are independently H, C₁-C₆ alkyl, 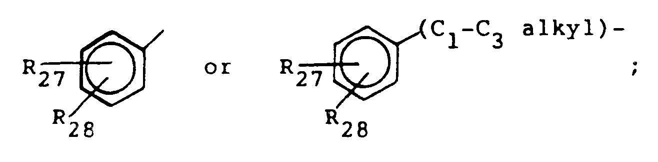
- R₂₇ and R₂₈: are independently H, F, Cl, Br, I, C₁-C₃ alkyl, C₁-C₃ haloalkyl, C₁-C₃ alkoxy, C₁-C₃ haloalkoxy, C₁-C₃ alkyl S(O)_{q}, C₁-C₃ haloalkyl S(O)_{q}, NO₂, CN or phenyl; and
- q: is 0, 1 or 2;
provided that when R₂₄ is other than hydrogen, one of
- R₂₅ or R₂₆: is hydrogen.

The term "fully saturated" used with respect to the carbon atom of Q or J bonded to the nitrogen atom of the triazole refers to a carbon atom to which all substituents are bonded through single bonds.

### DETAILED DESCRIPTION OF THE INVENTION

The difficulties involved in selectively alkylating a specific ring nitrogen of a polynitrogen heteroatomic compound represent a major problem in the area of heterocyclic chemistry (see for example, R. A. Olofson and R. V. Kendal, J. Org. Chem. 35, 2246, 1970). The N-alkylation of 1,2,4-triazoles to afford the unsymmetrical 1H-1,2,4-alkyltriazoles is no exception (see R. A. Olofson and R. V. Kendal, J. Org. Chem. 35, 2246, 1970 and C. Temple and J. A. Montgomery, Triazoles, Vol. 37 of The Chemistry of Heterocyclic Compounds, A. Weissberger and E. C. Taylor, Eds., John Wiley and Sons, New York, 1981, page 5). While such alkylation reactions (Equations A and B) can be conveniently carried out by the treatment of a metal salt (M) of the 1,2,4-triazole (1) with an alkylating agent (RZ or an oxirane), mixtures of the unsymmetrical 1H-1,2,4-alkyltriazole (2ab) and symmetrical 4H-1,2,4-alkyltriazole (3ab result (see J. Org. Chem. 35, 2246, 1970).

### Equation A

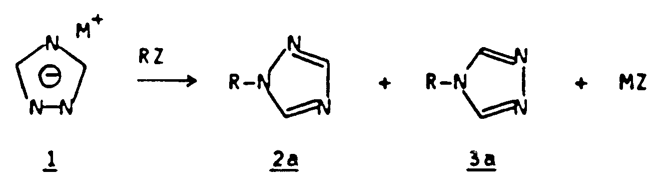

(Z is a leaving group)

### Equation B

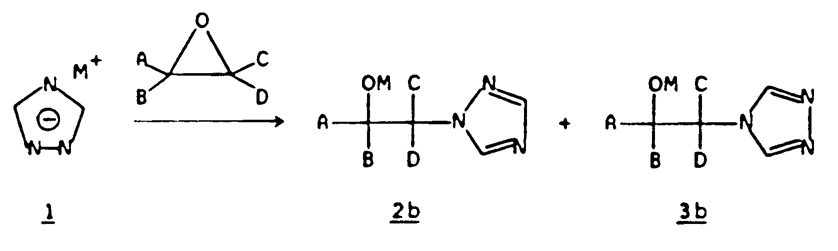

In general, the unsymmetrical 1H-1,2,4-triazole is the major product with the amounts of the symmetrical 4H-1,2,4-triazole by-product varying with the reaction conditions (solvent, temperature), nature of the metal ion, and nature of the alkylating agent. Some separation procedure is then required to obtain the pure isomers.

In the case of biologically active 1,2,4-triazole derivatives with for example, antifungal, antimycotic or microbicidal properties, activity usually resides in the unsymmetrical 1H-1,2,4-triazole isomer. The formation of the by-product symmetrical isomer represents a cost penalty because it then reduces the yield of the desired compound and requires the separation and disposal of the unwanted isomer.

This problem has previously been addressed either by devising a procedure for the selective preparation of the desired 1H-1,2,4-triazole compound other than through alkylation of a triazole, or by a process for the conversion of the symmetrical by-product to its unsymmetrical counterpart. The present invention represents a new development with respect to the latter approach to addressing this problem.

Compounds of the invention where Q or J represent the radicals of antifungal, antimycotic or microbicidal 1H-1,2,4-triazoles (compounds of Formula II or Formula VIII) are well known in the art. 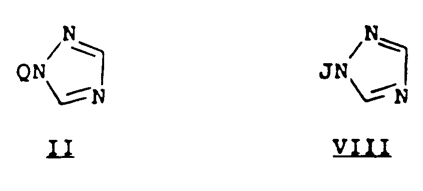
This structural class has recently been reviewed in L. Zirngibl, Progress in Drug Research, 27, 253-383 (1983). The following publications and references cited therein disclose compounds of Formulae II and VIII and their preparation:
1. Belgian Patent Application 900,594 (published March 18, 1985).
2. Belgian Patent Application 900,411 (published February 25, 1985).
3. Belgian Patent Application 900,063 (published January 2, 1985).
4. German Patent Application 3,505,869 (published August 22, 1985).
5. German Patent Application 3,407,869 (published April 4, 1985).
6. German Patent Application 3,402,166 (published July 25, 1985).
7. German Patent Application 3,334,779 (published April 11, 1985).
8. German Patent Application 3,334,409 (published April 18, 1985).
9. German Patent Application 3,329,128 (published February 28, 1985).
10. German Patent Application 3,327,036 (published February 7, 1985).
11. German Patent Application 3,326,456 (published January 31, 1985).
12. European Patent Application 158,448 (published October 16, 1985).
13. European Patent Application 158,356 (published October 16, 1985).
14. European Patent Application 153,803 (published September 4, 1985).
15. European Patent Application 153,797 (published September 4, 1985).
16. European Patent Application 151,084 (published August 7, 1985).
17. European Patent Application 150,499 (published August 7, 1985).
18. European Patent Application 145,294 (published June 19, 1985).
19. European Patent Application 140,154 (published May 8, 1985).
20. European Patent Application 132,771 (published February 13, 1985).
21. European Patent Application 131,684 (published January 23, 1985).
22. Japanese Patent Application 60158177 (published August 19, 1985).
23. Japanese Patent Application 60087273 (published May 16, 1985).
24. Japanese Patent Application 60069067 (published April 19, 1985).
25. Japanese Patent Application 59212491 (published December 1, 1984).
26. Japanese Patent Application 59212476 (published December 1, 1984).
27. U.S. 4,507,140 (issued March 26, 1985).
28. German Patent Application 3,314,548 (published October 25, 1984).
29. German Patent Application 3,018,865 (published November 26, 1981).
30. European Patent Application 114,567 (published August 1, 1984).
31. European Patent Application 114,487 (published August 1, 1984).
32. European Patent Application 72,580 (published February 23, 1983).
33. European Patent Application 52,424 (published May 26, 1982).
34. European Patent Application 40,345 (published November 25, 1981).
35. U.S. 4,496,388 (issued January 29, 1985).
36. U.S. 3,993,765 (issued November 23, 1976).
37. U.S. 3,972,892 (issued August 3, 1976).
38. German Patent Application 3,242,222 (published May 17, 1984).
39. German Patent Application 3,237,400 (published April 12, 1984).
40. German Patent Application 3,222,166 (published December 15, 1983).
41. German Patent Application 3,140,277 (published April 28, 1983).
42. European Patent Application 117,578 (published September 5, 1984).
43. European Patent Application 117,100 (published August 29, 1984).
44. British Patent Application 2,114,120 (published August 17, 1983).
45. U.S. 4,530,922 (issued July 23, 1985).
46. U.S. 4,510,136 (issued April 9, 1985).
47. European Patent Application 11,769.
48. European Patent Application 15,756.
49. European Patent Application 36,153.
50. Belgian Patent Application 867,245.
51. U.S. 4,654,332 (issued March 31, 1987).
52. Belgian Patent Application 857,570.
53. U.S. 4,079,062.
54. U.S. 3,912,752.
55. U.S. 4,217,129.
56. U.S. 4,243,405.
57. U.S. 4,205,075.
58. Australian Patent Application 25253/84.
59. U.S. 4,657,920 (issued April 14, 1987).

The corresponding triazoles of Formula I and Formula VII are formed during the preparation of the unsymmetrical triazoles of Formula II and Formula VIII and can be isolated from the mixture of isomers by standard separation techniques described in the art.

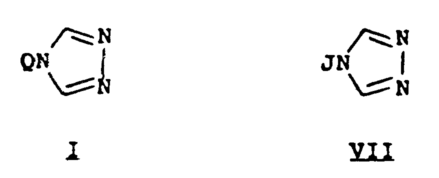

Compounds of Formulae II and III where Q is Q₁ are disclosed in U.S. 4,510,136.

Compounds of Formulae II and III where Q is Q₂ or Q₅ are disclosed in U.S. 4,079,062.

Compounds of Formulae II and III where Q is Q₃ are disclosed in U.S. 3,912,752.

Compounds of Formula II where Q is Q₄ are disclosed in Belgian Patent Application 857,570 (published August 8, 1977).

Compounds of Formula III where Q is Q₄ can be prepared from the alcohol 4 using standard methods for the conversion of hydroxyl groups to halides, for example, see H. O. House, Modern Synthetic Reactions, second edition, W. A. Benjamin, Inc., 1972, pages 446 to 459. 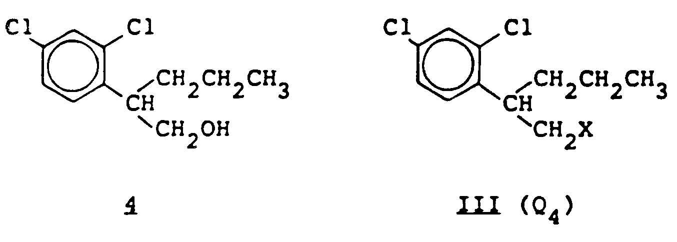
The intermediate 4 can be prepared according to the teachings of the previously cited application.

The triazole of Formula II and the halides of Formula III where Q is Q₆, the triazole of Formula VIII where J is J₁, and the oxirane L₁, are disclosed in EP-A-15,756.

The triazole of Formula II where Q is Q₇ and the triazole of Formula VIII where J is J₂ are disclosed in U.S. 4,217,129. The halides of Formula III where Q is Q₇ and the oxirane L₂ can be prepared from the β,γ-unsaturated ketone (5) by 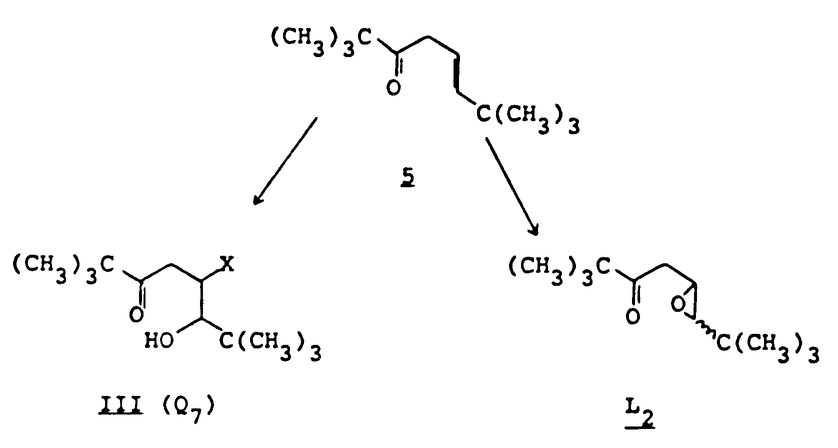
methods taught in H. O. House, Modern Synthetic Reactions, second edition, W. A. Benjamin, Inc., 1972, pages 432 to 442 and pages 296 to 321, respectively. Intermediate 5 can be prepared from diketone 6 and aldehyde 7 according to the methods described in K. Uchara, F. Kitamura, M. Tanaka, Bull. Chem. Soc. Jap. 49, 493 (1976). 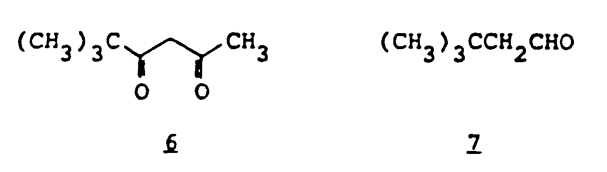
Diketone 6 can be prepared according to the teachings in R. Levine, J. A. Conroy, J. Adams, C. R. Hauser, J. Am. Chem. Soc. 67, 1510 (1945). Aldehyde 7 is available through the oxidation of commercially available 3,3-dimethyl-1-butanol by known methods.

The triazoles of Formula II where Q is Q₈ and of Formula VIII where J is J₃ are disclosed in U.S. 4,243,405 and U.S. 4,205,075. The halides of Formula III where Q is Q₈ can be prepared by metal hydride reductions of the β-haloketones 8 disclosed in the previously cited patents by methods described in H. O. House, Modern Synthetic Reactions, second edition, W. A. Benjamin, 1972, pages 474 to 476. 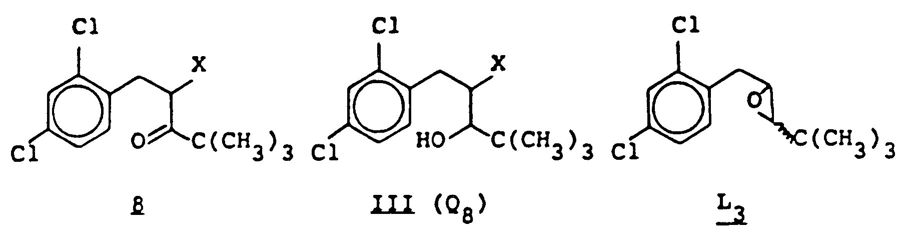
The epoxide L₃ can be prepared from the corresponding halohydrins of Formula III utilizing methodology also described in Modern Synthetic Reactions, pages 435 and 436.

The triazole of Formula II and the halides of Formula III where Q is Q₉, the triazole of Formula VIII where J is J₄, and the oxirane L₄ are disclosed in EP-A-15,756.

The triazole of Formula II where Q is Q₁₀, the triazole of Formula VIII where J is J₅, and the oxirane L₅ are disclosed in Australian Patent Application 25253/84. The halides of Formula III where Q is Q₁₀ can be prepared from the ketone 9 disclosed in the previously cited reference by reaction with methylene triphenylphosphorane followed by conversion of the resulting olefin 10 to a halohydrin (Formula III, Q₁₀) as described in Modern Synthetic Reactions, pages 432 to 442. 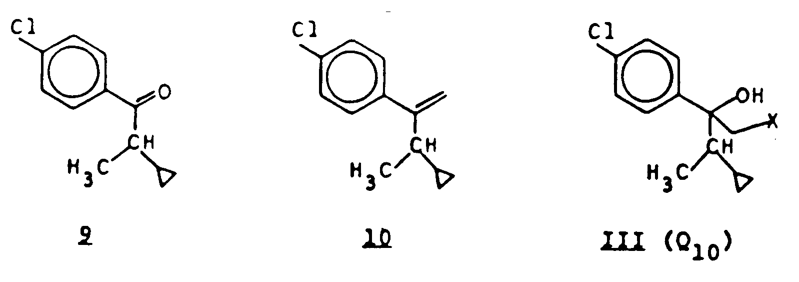
The triazoles of Formula II where Q is Q₁₁, the triazole of Formula VIII where J is J₆, and the oxirane L₆ are disclosed in EP-A-40,345. The halides of Formula III where Q is Q₁₁ can be prepared from ketone 11 disclosed in the previously cited reference by reaction with methylenetriphenylphosphorane followed by conversion of the resulting olefin 12 to a halohydrin (Formula III, Q₁₁) as described in Modern Synthetic Reactions, pages 432 to 442. 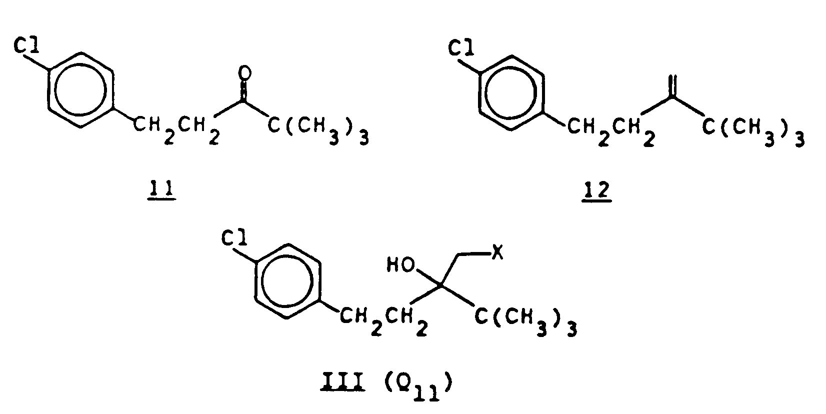
The triazole of Formula II and the halides of Formula III where Q is Q₁₂ are disclosed in EP-A-145,294.

The triazoles of Formula I where Q is Q₁ to Q₁₂ and the triazoles of Formula VII where J is J₁ to J₆ are by-products in the preparation or the corresponding triazoles of Formulae II and VIII. Again, these symmetrical derivatives can be separated from the isomer mixture by standard purification techniques well known to one skilled in the art.

Without being bound, it is believed that the processes of the invention for the isomerization of a symmetrical triazole of Formulae I or VII to the corresponding unsymmetrical triazole of Formulae II or VIII are summarized in Equations C and D, respectively.

### Equation C

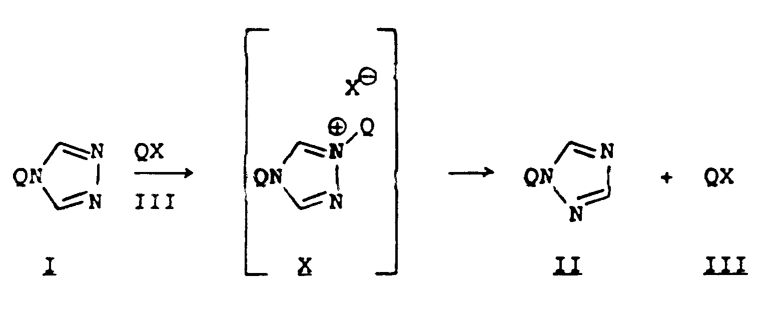

### Equation D

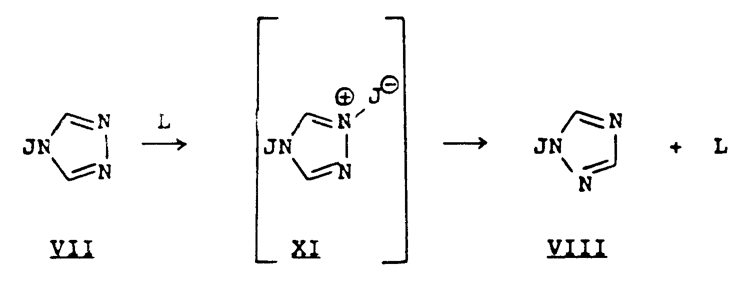

In the process of Equation C, treatment of the 4H-1,2,4-triazole I with the isomerizating agent QX results in the formation of the quaternary ammonium salt X which then undergoes fragmentation to the 1H-1,2,4-triazole II with the regeneration of QX. This sequence is exemplified in Equation E by the isomerization of 1-[[bis(4-fluorophenyl)methylsilyl]methyl]-4H-1,2,4-triazole (Q is Q₁) to 1-[[bis(4-fluorophenyl)methylsilyl]methyl]-1H-1,2,4-triazole.

### Equation E

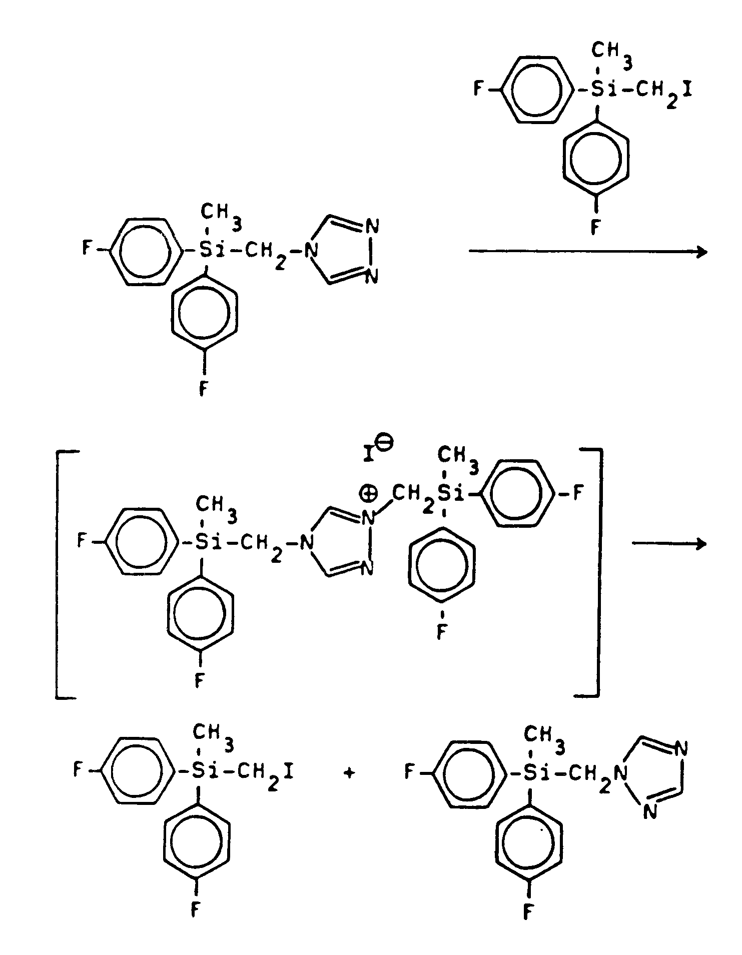

The process of Equation D is exemplified by the isomerization of (RS)-2,4′-difluoro-α-(4H-1,2,4-triazol-1-ylmethyl)benzhydryl alcohol (J is J₁) to (RS)-2,4′-difluoro-α-(1H-1,2,4-triazol-1-ylmethyl)benzhydryl alcohol (Equation F).

### Equation F

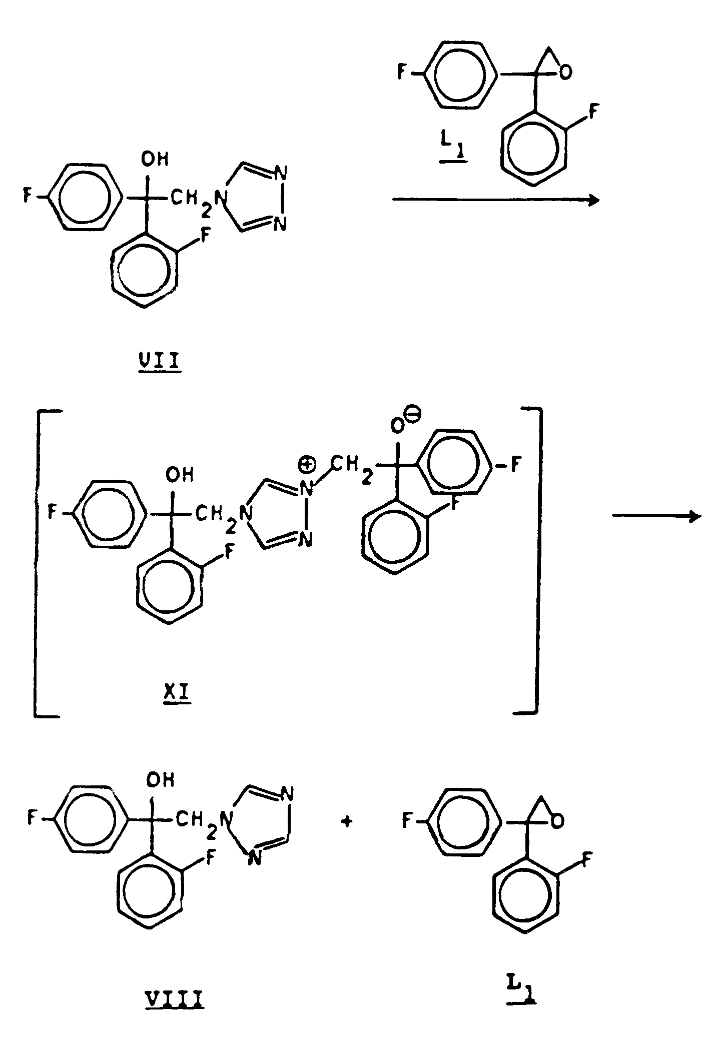

The alkylation of the 4H-1,2,4-triazole VII by the epoxide L₁ affords the intermediate Zwitterion XI which fragments to the 1H-1,2,4-triazole VIII with the transfer of a proton to the alkoxide and reformation of the starting epoxide (L₁).

From Equations C, D, E and F, one skilled in the art would recognize that Q and J would not contain functional groups which themselves would be reactive with the isomerizing agents QX or L, for example, thiols or amines including amino groups, substituted amino groups or nitrogen containing heterocycles, or that such functionality would first have to be rendered non reactive prior to carrying out the isomerization process, utilizing a molar excess of the isomerizing agent or "protecting groups" well known in the art. See for example, T. W. Greene, Protective Groups in Organic Synthesis, John Wiley and Sons, New York, 1981.

These reactions are conveniently carried out in the absence of solvent or in the presence of an inert aprotic solvent or mixtures of such solvents. Factors to be considered in selecting a particular solvent include the solubility of the reactants in the media at the reaction temperature, ease of isolation of the product from the reaction mixture and ease of access to the desired reaction temperature.

Suitable solvents include aliphatic and aromatic hydrocarbons, halogenated aromatic hydrocarbons, ethers, esters, and amides. Specific solvents include petroleum fractions, petroleum ethers, C₅-C₆ aliphatic hydrocarbons, for example, pentane, hexane, heptane, octane, nonane, decane, cyclohexane or methylcyclohexane, benzene, toluene, xylenes, chlorobenzene, dichlorobenzene, trimethylbenzene, durene, p-ethyltoluene, ethylether, methyl-t-butyl ether, i-propylether, tetrahydrofuran, dioxane, ethyl acetate, dimethylacetamide, dimethylformamide and N-methylpyrrolidinone. Preferred solvents include aromatic and halogenated aromatic hydrocarbons, for example, xylenes or o-dichlorobenzene.

The rate and/or efficiency of the isomerization process is affected by moisture, the reaction temperature, the degree of mixing of ingredients, and the concentrations, ratios and chemical structure of the reactants.

The present invention is conducted at elevated temperatures usually between about 100°C and about 300°C, preferably between about 100°C and about 250°C, more preferably between about 140°C and about 200°C. Temperatures below about 100°C are operable but not preferred because isomerization rates decline with decreasing temperature. At temperatures above 300°C, decomposition of the reactants and/or products can occur. In general, for a given reaction, the rate of isomerization doubles with each 10°C increase in temperature. The isomerization reactions can be conducted at atmospheric pressure or under autogenous pressure depending upon the solvent and the temperature desired. Rate acceleration of the reaction under pressure has been observed.

Intimate mixing of the reactants is preferred especially in the absence of solvent.

It is preferred to conduct the present invention under an inert atmosphere in dry solvents because water adversely affects the efficiency of the process by reacting with the isomerizing agents QX or L and/or the substrates. Reactants containing silicon are especially sensitive to water.

With respect to the concentration of the reactants in the reaction mixture, the main limitation is the solubility of the materials in the solvent at the reaction temperature if a solvent is to be used.

While carrying out the isomerization reaction in less polar solvents e.g. xylene, precipitation of the intermediate salts X has been observed. These salts can typically be redissolved by diluting the reaction mixture with additional solvent, adding a more polar cosolvent, or increasing the temperature of the reaction mixture.

As indicated in Equations C, D, E and F, since the isomerization agent QX or epoxide L is regenerated in the isomerization process upon breakdown of the intermediates X and XI to the product unsymmetrical triazoles. By retaining at least a portion of the isomerizing agent in the reaction medium, reactions can be carried out in the presence of less than stoichiometric (i.e., less than about 90%) amounts of these reactants (QX or L). Although quantities of QX or epoxide L of about 0.1 mole % relative to the amount of the symmetrical triazoles I or VII can effect isomerization to the unsymmetrical isomer, the preferred range of these reactants is about 1 to 20 mole %, more preferred is about 2 to 10 mole % most preferred is about 4 to 8 mole %, especially preferred is about 6 mole %. Factors to consider in the selection of the ratio of QX or L with respect to the triazoles I or VII is the desired rate of isomerization, reaction temperature, relative reactivity of QX or L and the ease of separ- ation of these reactants from the product unsymmetrical triazole in the reaction mixture.

In general, the lower the ratio of triazole I or VII to the isomerizing agent QX or L, the higher the rate of conversion at a given temperature. The use of very high temperatures for the conversion can effect the decomposition of QX or L resulting in a decrease in the conversion rate and/or reduced yields of the product triazole, however.

The relative reaction rate is also affected by the reactivity of the isomerizing agents QX and L. With respect to the isomerizing agents QX, in the process of the invention iodides are more reactive than the corresponding bromides which are more reactive than the chlorides. Primary halides QX are more reactive than secondary halides. Primary epoxides L are more reactive than secondary epoxides. In some conversions utilizing QX, the addition of pyridines, tertiary phosphines or tertiary amines may enhance the reactivity of these halides.

With respect to the relative rate of isomerization and the reactivity of the substrate triazoles I or VII, in general primary 4H-1,2,4-triazole derivatives undergo isomerization to their 1H-1,2,4-triazole counterparts at higher rates than secondary 4H-1,2,4-triazoles.

The higher the rate of triazole I or VII to QX or L, the more convenient the isolation of the unsymmetrical triazole II or VIII from the product reaction mixture.

The isomerizing agents QX or L can also be conveniently generated in situ in the reaction mixture as described in Equations G and H.

### Equation G

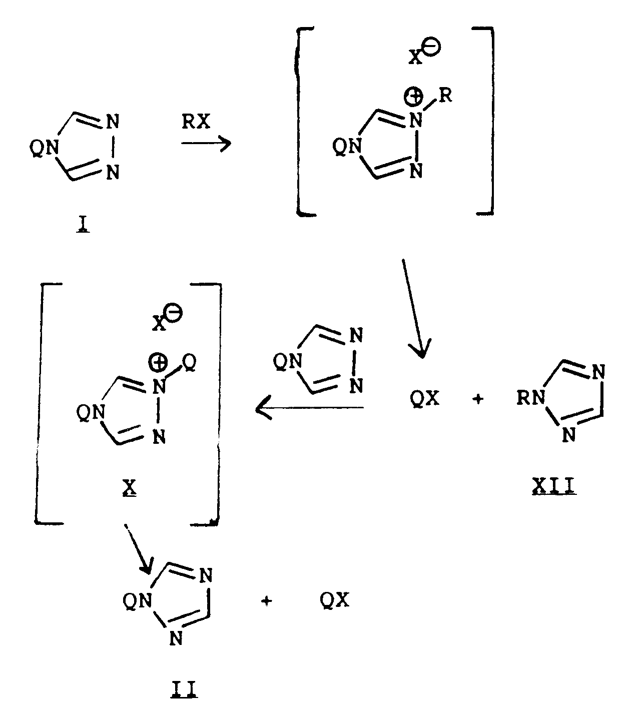

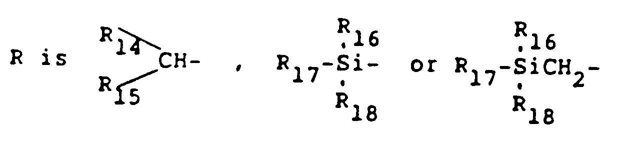

### Equation H

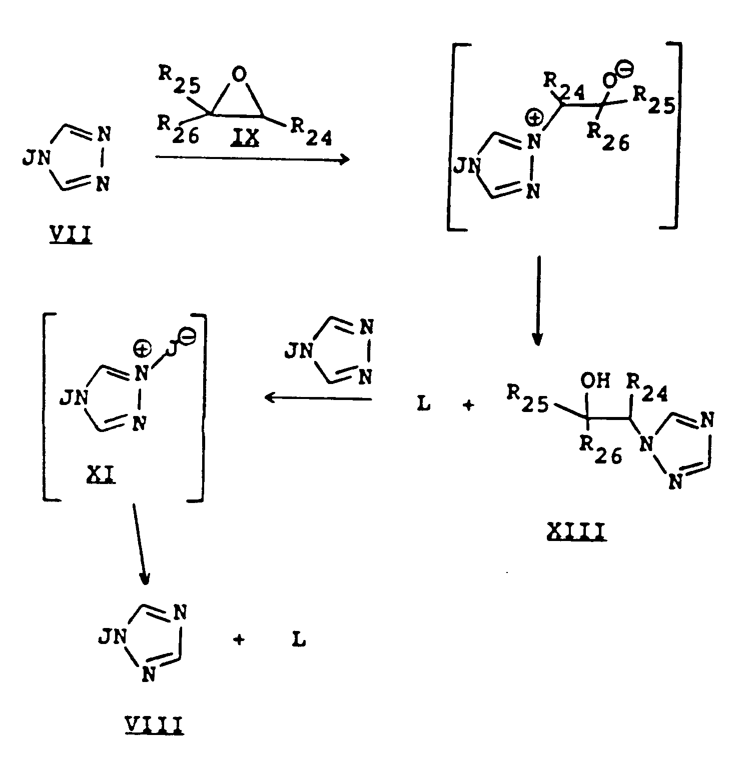

In Equation G, RX represents a halide, silylhalide or silylmethylhalide of Formula IV, V or VI, respectively different from QX. Once formed by this process, QX then effects the isomerization of symmetrical triazole I to the unsymmetrical triazole II and is subsequently regenerated. The reaction conditions for this sequence are as previously discussed where the conversion is effected directly by QX. This process for the in situ generation of the isomerizing agent QX is most useful the higher the ratio of the substrate triazole I to the initiating isomerizing agent RX. The higher this ratio, the lower the reduction in yield of the product triazole II resulting from the formation of the alkylated or silylated triazole XII and the easier the separation of the product from the other species of the reaction mixture. Triazole substrates of Formula I bearing free hydroxyl groups may react with compounds of Formula V forming the corresponding derivatives where the OH group or groups have been silylated. Thus in isomerization reactions involving such substrates where QX is generated in situ in the reaction mixture utilizing a compound of Formula V, a quantity of V in excess of the stoichometric amount required to first silylate the free hydroxy groups of the triazole of Formula I must be used.

Many halides of Formula IV are commercially available or can be prepared from commercially available alcohols by methods well known to one skilled in the art. Silylhalides and silylmethylhalides are also available from commercial sources or can be prepared as described in V. Bazant, V. Chvalovsky, J. Rathousky, Organosilicon Compounds, Academic Press, New York, 1965 and C. Eaborn, Organosilicon Compounds, Butterworths Scientific Publications, London, 1960.

As with the isomerizing agents QX, iodides are more reactive than the corresponding bromides which are more reactive than the chlorides. Primary alkyl or arylalkyl halides are more reactive than secondary derivatives.

Examples of suitable compounds of Formulae IV, V and VI include methyl iodide, ethyl iodide, benzyl iodide, benzyl bromide, benzyl chloride, trimethylsilyl iodide, trimethylsilyl bromide, trimethylsilyl chloride, triethylsilyl chloride, triphenylsilyl bromide, triphenylsilyl chloride and trimethylsilylmethyl iodide.

As indicated in Equation H, the epoxide L can be generated by initial reaction of an epoxide of Formula IX different from L with the triazole of Formula VII. Once formed by this process, L then effects the isomerization of the symmetrical triazole VII to the unsymmetrical triazole VIII and is subsequently regenerated. Again, the reaction conditions for this sequence are as previously discussed where the isomerization is effected directly by L. Also, the process is again most useful the higher the ratio of the substrate triazole VII to the initiating epoxide IX. The higher this ratio, the lower the reduction in yield of the product triazole VIII resulting from the formation of the triazole XIII and the easier the separation of the product from the other species of the reaction mixture. Many epoxides of Formula IX are commercially available or can be prepared from commercial olefins by epoxidation methods well known to one skilled in the art. Examples of suitable epoxides of Formula IX include 1,2-epoxybutane, 2,3-epoxybutane, 1,2-epoxydecane, 1,2-epoxydodecane, styrene oxide, 1,2-epoxyhexane, 1,2-epoxyoctane or 1,2-epoxypropane.

Finally, as exemplified in Equation I by the isomerization of the symmetrical triazole of Q₆, conversion of a triazole of Formula I, where the carbon atom of Q bonded to the nitrogen atom of the triazole is also bonded to a carbinol group, to the corresponding triazole of Formula II, by reaction with a halide of Formula III can afford an epoxide XIV in addition to or instead of the reformation of halide III. In such cases, the epoxide XIV so formed can then effect the conversion of the triazole I as previously described in Equations D and F. Similarly, the epoxide XIV can also be formed utilizing a halide of Formulae IV, V or VI as described in Equation G.

### Equation I

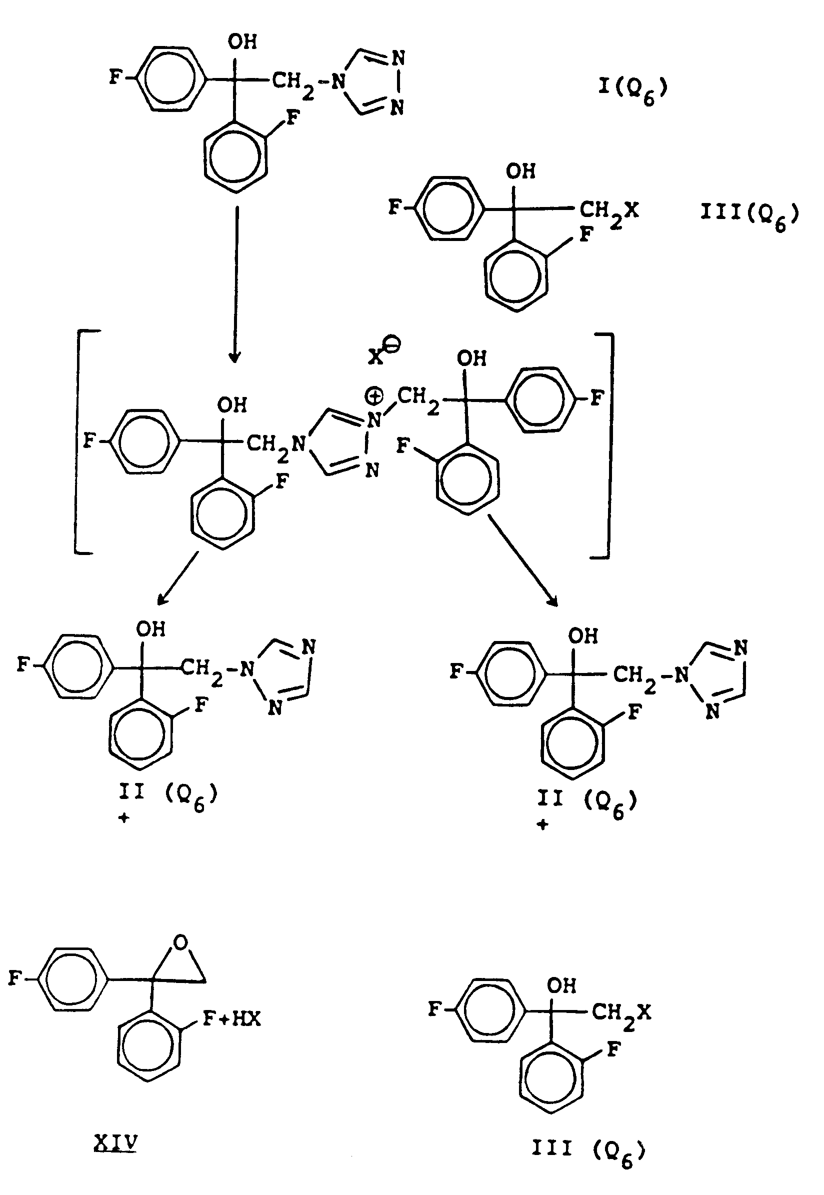

The following examples illustrate but are in no way intended to restrict the process of the invention. In these examples, "xylene" refers to a mixture of the ortho, meta and para isomers. All gas chromatographic analyses were performed on a Hewlett-Packard 5840A Gas Chromatograph equipped with an FID detector utilizing a HP17 flexible capillary column (50% phenyl silicone). The initial column temperature was 135°C and was programmed to rise 8°C/min. from 135-250°C.

The bis (4-fluorophenyl)(iodomethyl)methysilane utilized as the isomerizing agent in Examples 1 and 5 was prepared as follows:

### Preparation of bis(4-fluorophenyl)(iodomethyl)methylsilane

Bis(4-fluorophenyl)(chloromethyl)methylsilane - prepared as described in U.S. 4,510,136 - (1479 g as a 51% solution by weight in toluene) was combined with sodium iodide (537.6 g). Methylisobutyl ketone (2120 ml) was added and the mixture refluxed for 22 hrs. Salts were then removed by filtration and the solution containing bis(4-fluorophenyl)(iodomethyl)methylsilane (2927 g) was used directly.

### Example 1

### Isomerization of 1-[[bis(4-fluorophenyl)methylsilyl]methyl]-4H-1,2,4-triazole to 1-[[bis(4-fluorophenyl)methylsilyl]methyl-1H-1,2,4-triazole

1-[[Bis(4-fluorophenyl)methylsilyl]methyl]-4H-1,2,4-triazole (23.2 g, 73.5 mmole) as an 18% solution in xylene/sec-butanol (1:1) and bis(4-fluorophenyl)(iodomethyl)methylsilane (1.39 g, 3.71 mmole) as a 20% solution in toluene/methylisobutyl ketone (1:3) were combined in a 250 ml, 4-necked round bottomed flask equipped with an overhead stirrer, thermometer, nitrogen blanket added through a gas inlet tube, and short path distillation head with thermometer. The reaction mixture was heated and dried azeotropically by removal of solvent through the distilling head. The distillation was continued until the temperature of the reaction mixture reached 175°C at which point all of the sec-butanol had been removed. The distillation head was then removed and replaced with a stopper, a condenser was inserted between the flask and the gas inlet tube and the mixture refluxed at 175°C for 20 hrs.

At this point, gas chromatographic analysis of the reaction mixture indicated 97% conversion of the starting 4H-1,2,4-triazole to 1-[[bis(4-fluorophenyl)methylsilyl]methyl]-1H-1,2,4-triazole by comparison to an authentic sample prepared according to U.S. 4,510,136. The reaction mixture was diluted to a 25% concentration of the 1H-1,2,4-triazole product by addition of xylene/ethylacetate (9:1). Aqueous 37% hydrochloric acid (12 g) was added at a rate such that the temperature of the mixture remained below 30°C. The resulting hydrochloride salt of the product which precipitated was collected by filtration and washed with xylene (60 ml). The solid was then slurried in additional xylene (50 ml) and 10% aqueous sodium carbonate was added until the mixture was adjusted to pH 8. The phases were separated and the xylene solution washed with water. The yield of 1-[[bis(4-fluorophenyl)methylsilyl]methyl]-1H-1,2,4-triazole was determined to be 17.6 g (76%) by gas chromatographic analysis.

### Example 2

### Isomerization of 1-[[bis(4-fluorophenyl)methylsilyl]methyl]-4H-1,2,4-triazole to 1-[[bis(4-fluorophenyl)methylsilyl]methyl]-1H-1,2,4-triazole utilizing benzyl bromide

1-[[Bis(4-fluorophenyl)methylsilyl]methyl]-4H-1,2,4-triazole was dried in xylene/sec-butanol (1:1) by azeotropic removal of the sec-butanol from the mixture through distillation. Cooling of the resulting xylene solution resulted in precipitation of the dried 4H-1,2,4-triazole of which 15.2g (48 mmole) was collected by filtration and combined with benzyl bromide (15.24 g, 0.9 mole). The mixture was heated at 175°C under nitrogen for 20 hrs. Analysis of the reaction mixture by gas chromatography indicated the mixture to be composed of 2% 1-[[bis(4-fluorophenyl)methylsilyl]methyl]-4H-1,2,4-triazole, between 5 and 10% 1-[[bis(4-fluorophenyl)methylsilyl]methyl]-1H-1,2,4-triazole, and about 50% 1-benzyl-1H-1,2,4-triazole.

### Example 3

### Isomerization of 1-[[bis(4-fluorophenyl)methylsilyl]methyl]-4H-1,2,4-triazole to 1-[[bis(4-fluorophenyl)methylsilyl]methyl]-1H-1,2,4-triazole utilizing trimethylsilyl iodide - identification of bis(4-fluorophenyl)(iodomethyl)methylsilane in the reaction mixture

1-[[Bis(4-fluorophenyl)methylsilyl]methyl]-4H-1,2,4-triazole was dried in xylene/sec-butanol (1:1) by azeotropic removal of the sec-butanol from the mixture through distillation. Cooling of the resulting xylene solution resulted in precipitation of the dried 4H-1,2,4-triazole which was collected by filtration. The compound (25 g, 79 mmole), trimethylsilyl iodide (1.4 g, 7 mmole) and xylene (25 ml) were combined, solvent was removed by distillation until the temperature of the reaction mixture reached 175°C and then heating was continued at 175°C under nitrogen for 20 hrs. Gas chromatographic analysis of the reaction mixture indicated essentially complete conversion of the 4H-1,2,4-triazole (less than 2% remained) to the 1H-1,2,4-triazole derivative in 85% yield. The analysis also indicated the presence of bis(4-fluorophenyl)(iodomethyl)methylsilane by comparison with an authentic sample.

### Example 4

### Isomerization of 1-[[bis(4-fluorophenyl)methylsilyl]methyl]-4H-1,2,4-triazole to 1-[[bis(4-fluorophenyl)methylsilyl]methyl]-1H-1,2,4-triazole utilizing benzyl bromide

1-[[Bis(4-fluorophenyl)methylsilyl]methyl]-4H-1,2,4-triazole was azeotropically dried as described in Examples 2 and 3. The dried compound (30.5 g, 97 mmole) and benzyl bromide (0.5 g, 3 mmole) were heated at 170°C under nitrogen for 6 days. Gas chromatographic analysis indicated that about 25% of the starting 4H-1,2,4-triazole remained and that 1-[[bis(4-fluorophenyl)methylsilyl]methyl]-1H-1,2,4-triazole had been formed.

### Example 5

### Isomerization of 1-[[bis(4-fluorophenyl)methylsilyl]methyl]-4H-1,2,4-triazole to 1-[[bis(4-fluorophenyl)methylsilyl]methyl]-1H-1,2,4-triazole

1-[[Bis(4-fluorophenyl)methylsilyl]methyl]-4H-1,2,4-triazole was azeotropically dried as described in Examples 2 and 3. The dried compound (31.5 g, 100 mmole), bis(4-fluorophenyl)(iodomethyl)methylsilane (7.48 g, 20 mmole), and xylene (100 ml) were combined, heated under nitrogen, xylene (25 ml) was removed by distillation, and the mixture refluxed at 138°C. After 32 hrs., conversion was 97% complete by gas chromatographic analysis which also indicated an 85% yield of 1-[[bis(4-fluorophenyl)methylsilyl]methyl]-1H-1,2,4-triazole. (Less than 2% of the starting 4H-1,2,4-triazole remained.)

## Claims

1. A process comprising isomerizing a symmetric 4H-1,2,4-triazole of Formula I to an unsymmetric 1H-1,2,4-triazole of Formula II in the presence of an isomerizing agent of Formula III 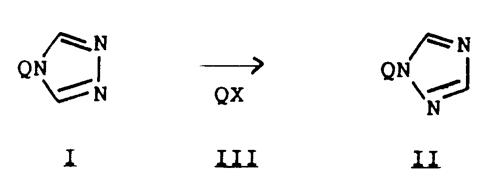 wherein
Q is an optionally substituted radical of up to about 35 carbon atoms bonded to the triazole or to X through a carbon atom; and;
X is Cl, Br or I;
provided that
(a) the carbon atom of Q bonded to the nitrogen atom of the triazole or to X is fully saturated and is substituted by at least one hydrogen atom;
(b) heteroatom substituents on the carbon atom of Q bonded to the nitrogen atom of the triazole or to X are limited to one oxygen radical so as to form an ether linkage or one silicon radical;
(c) when a substituent of the carbon atom of Q bonded to the nitrogen atom of the triazole or to X is an oxygen radical, then the other substituent of the carbon atom of Q bonded to the nitrogen atom of the triazole or to X is bonded to said carbon through a carbonyl group; and
(d) substituents on the silicon radical are bonded to the silicon through oxygen or carbon.

2. The process of Claim 1 where Q is 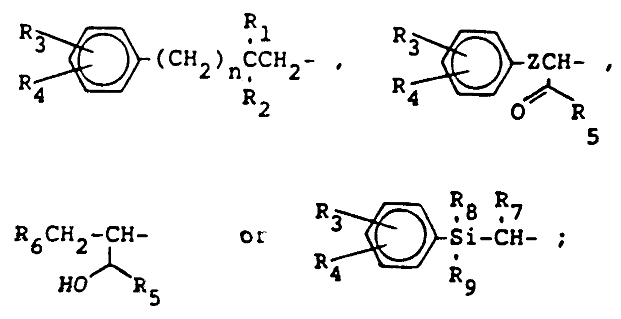
R₁ is C₁-C₄ alkyl, OR₁₁ or CN;
R₂ is H, C₁-C₄ alkyl, C₃-C₆ cycloalkyl, C₄-C₆ cycloalkylalkyl, 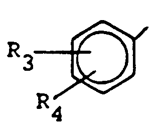 or R₁ and R₂ taken together may be a ketal bridge 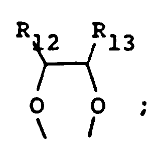
R₃ is halogen or phenyl;
R₄ is H or halogen;
R₅ is C₁-C₄ alkyl;
R₆ is C₅-C₇ alkylcarbonyl or 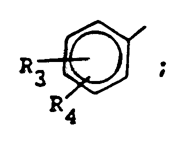
R₇ is H or CH₃;
R₈ and R₉ are independently C₁-C₄ alkyl, 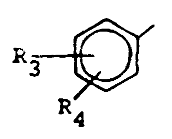 or OR₁₀ ;
R₁₀ is H or C₁-C₄ alkyl;
R₁₁ is H, C₁-C₄ alkyl or C₂-C₄ alkenyl;
R₁₂ and R₁₃ are independently H or C₁-C₄ alkyl;
n is 0, 1 or 2; and
Z is O or CH₂.

3. The process of Claim 1 where the radical Q is not substituted by a hydroxyl group.

4. The process of Claim 1 where the carbon atom of Q bonded to the nitrogen atom of the triazole or to X is substituted by at least two hydrogen atoms.

5. The process of Claim 1 where

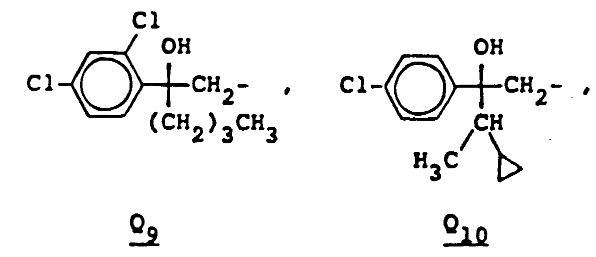

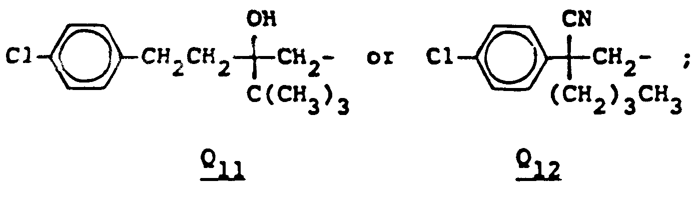

6. The process of Claim 5 where Q is Q₁.

7. The process of Claim 1 where X is Br or I.

8. The process of Claim 5 where X is Br or I.

9. The process of Claim 6 where X is Br or I.

10. The process of Claim 9 where X is I.

11. The process of Claim 1 where QX is in a concentration of at least about 6 mole %.

12. The process of Claim 1 where QX is in a concentration of at least about 4 to 8 mole %.

13. The process of Claim 1 where QX is in a concentration of at least about 2 to 10 mole %.

14. The process of Claim 5 where Q is in a concentration of at least about 6 mole %.

15. The process of Claim 5 where Q is in a concentration of at least about 4 to 8 mole %.

16. The process of Claim 5 where Q is in a concentration of at least about 2 to 10 mole %.

17. The process of Claim 6 where Q is in a concentration of at least about 6 mole %.

18. The process of Claim 6 where Q is in a concentration of at least about 4 to 8 mole %.

19. The process of Claim 6 where Q is in a concentration of at least about 2 to 10 mole %.

20. The process of Claim 1 where the isomerization is conducted at a temperature of about between 100° and 250° C.

21. The process of Claim 5 where the isomerization is conducted at a temperature of about between 100° and 250° C.

22. The process of Claim 6 where the isomerization is conducted at a temperature of about between 100° and 250° C.

23. The process of Claim 6 where the isomerization is conducted in N,N-dimethylformamide, toluene, xylene, ortho-dichlorobenzene or methylethyl ketone.

24. The process of Claim 23 where the isomerization is conducted in xylene.

25. The process of Claim 1 where the isomerizing agent of Formula III is formed in situ in the reaction mixture by initially introducing into the reaction media a compound of the Formulae IV, V or VI different from the compound of Formula III 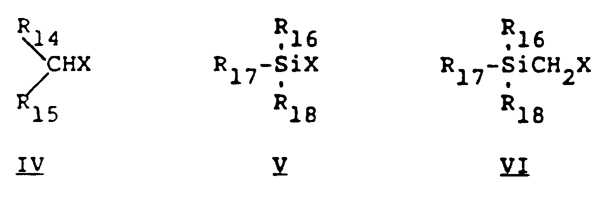 wherein
R₁₄ and R₁₅ are independently H, C₁-C₆ alkyl, C₂-C₆ alkylcarbonyl, C₂-C₆ alkoxycarbonyl, 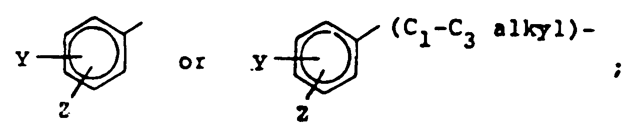
R₁₆, R₁₇ and R₁₈ are independently C₁-C₆ alkyl, 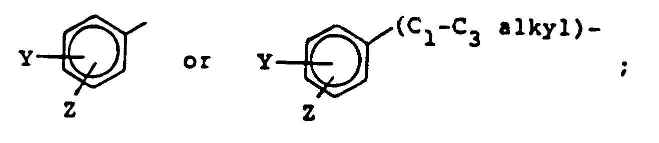
Y and Z are independently H, F, Cl, Br, I, C₁-C₃ alkyl, C₁-C₃ haloalkyl, C₁-C₃ alkoxy, C₁-C₃ haloalkoxy, C₁-C₃ alkyl S(O)ₘ, C₁-C₃ haloalkyl S(O)ₘ, NO₂, CN or phenyl; and
m is 0, 1 or 2.

26. The process of Claim 5 where the isomerizing agent of Formula III is formed in situ in the reaction mixture by initially introducing into the reaction media a compound of the formula 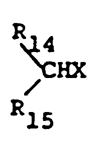 different from the compound of Formula III.

27. The process of Claim 5 where the isomerizing agent of Formula III is formed in situ in the reaction mixture by initially introducing into the reaction media a compound of the formula 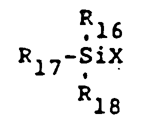 different from the compound of Formula III.

28. The process of Claim 5 where the isomerizing agent of Formula III is formed in situ in the reaction mixture by initially introducing into the reaction media a compound of the formula 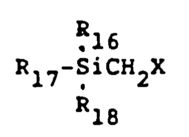 different from the compound of Formula III.

29. The process of Claim 26 where Q is Q₁.

30. The process of Claim 27 where Q is Q₁.

31. The process of Claim 28 where Q is Q₁.

## Patentansprüche

1. Verfahren, umfassend die Isomerisierung von symmetrischem 4H-1,2,4-Triazol der Formel I zu einem unsymmetrischen 1H-1,2,4-Triazol der Formel II in Gegenwart eines Isomerisierungsmittels der Formel III 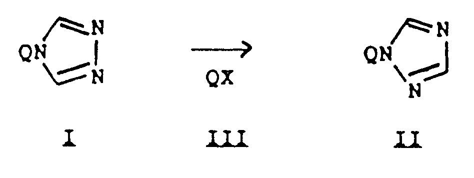 worin
Q ein frei wählbar substituiertes Radikal von bis zu etwa 35 Kohlenstoffatomen darstellt, das mit dem Triazol oder mit X über ein Kohlenstoffatom verknüpft ist; und
X für Cl, Br oder I steht;
mit der Maßgabe, daß
(a) das Kohlenstoffatom von Q, das an das Stickstoffatom des Triazols oder an X gebunden ist, vollständig gesättigt ist und mit wenigstens einem Wasserstoffatom substituiert ist;
(b) Heteroatom-Substituenten an dem Kohlenstoffatom von Q, das an das Stickstoffatom des Triazols oder an X gebunden ist, auf ein Sauerstoffradikal, so daß eine Etherbindung gebildet wird, oder auf ein Siliciumradikal beschränkt sind;
(c) Wenn ein Substituent des Kohlenstoffatoms von Q, das an das Stickstoffatom des Triazols oder an X gebunden ist, ein Sauerstoffradikal darstellt, der andere Substituent des Kohlenstoffatoms von Q, das mit dem Stickstoffatom des Triazols oder mit X verbunden ist, über eine Carbonylgruppe an den genannten Kohlenstoff gebunden ist; und
(d) Substituenten an dem Siliciumradikal an das Silicium über Sauerstoff oder Kohlenstoff gebunden sind.

2. Verfahren nach Anspruch 1, worin Q für 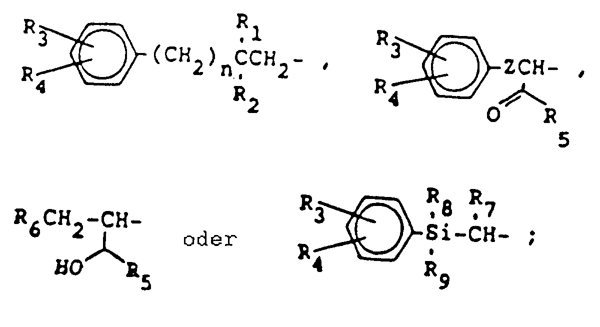 steht;
R₁ für C₁-C₄-Alkyl, OR₁₁ oder CN steht;
R₂ für H, C₁-C₄-Alkyl,
C₃-C₆-Cycloalkyl,
C₄-C₆-Cycloalkylalkyl, 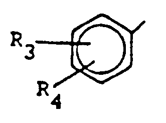 steht oder R₁ und R₂ zusammengenommen eine Ketalbrücke 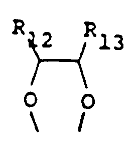 darstellen können;
R₃ für Halogen oder Phenyl steht;
R₄ für H oder Halogen steht;
R₅ für C₁-C₄-Alkyl steht;
R₆ für C₅-C₇-Alkylcarbonyl oder 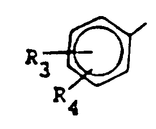 steht;
R₇ für H oder CH₃ steht;
R₈ und R₉ unabhängig für C₁-C₄-Alkyl, 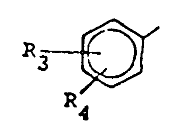 oder OR₁₀ stehen;
R₁₀ für H oder C₁-C₄-Alkyl steht;
R₁₁ für H, C₁-C₄-Alkyl oder C₂-C₄-Alkenyl steht;
R₁₂ und R₁₃ unabhängig für H oder C₁-C₄-Alkyl stehen;
n 0, 1 oder 2 bedeutet; und
Z O oder CH₂ bedeutet.

3. Verfahren nach Anspruch 1, bei dem das Radikal Q nicht mit einer Hydroxygruppe substituiert ist.

4. Verfahren nach Anspruch 1, bei dem das Kohlenstoffatom von Q, das an das Stickstoffatom von Triazol oder an X gebunden ist, mit wenigstens zwei Wasserstoffatomen substituiert ist.

5. Verfahren nach Anspruch 1, bei dem Q für 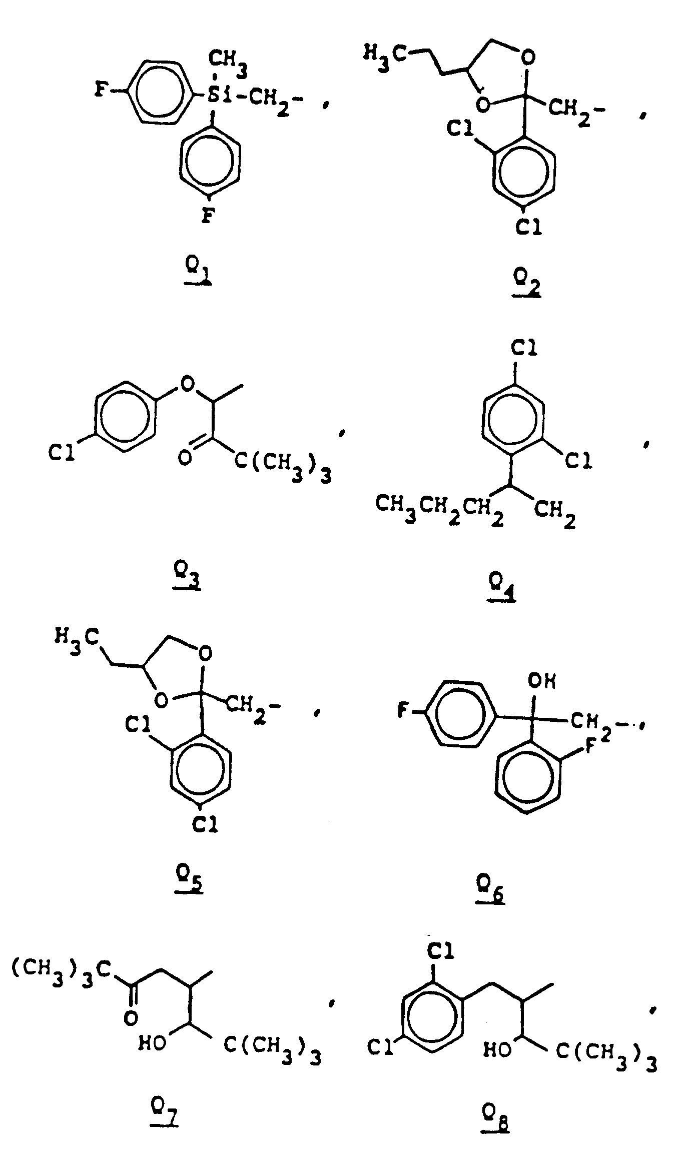 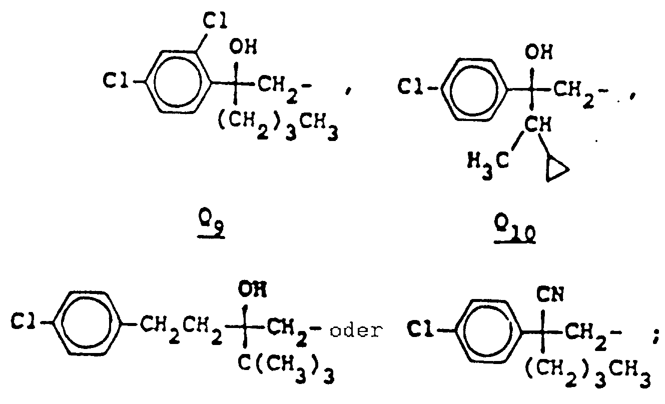 steht.

6. Verfahren nach Anspruch 5, bei dem Q für Q₁ steht.

7. Verfahren nach Anspruch 1, bei dem X für Br oder I steht.

8. Verfahren nach Anspruch 5, bei dem X für Br oder I steht.

9. Verfahren nach Anspruch 6, bei dem X für Br oder I steht.

10. Verfahren nach Anspruch 9, bei dem X für I steht.

11. Verfahren nach Anspruch 1, bei dem QX in einer Konzentration von wenigstens etwa 6 Mol-% vorhanden ist.

12. Verfahren nach Anspruch 1, bei dem QX in einer Konzentration von wenigstens etwa 4 bis 8 Mol-% vorhanden ist.

13. Verfahren nach Anspruch 1, bei dem QX in einer Konzentration von wenigstens etwa 2 bis 10 Mol-% vorhanden ist.

14. Verfahren nach Anspruch 5, bei dem Q in einer Konzentration von wenigstens etwa 6 Mol-% vorhanden ist.

15. Verfahren nach Anspruch 5, bei dem Q in einer Konzentration von wenigstens etwa 4 bis 8 Mol-% vorhanden ist.

16. Verfahren nach Anspruch 5, bei dem Q in einer Konzentration von wenigstens etwa 2 bis 10 Mol-% vorhanden ist.

17. Verfahren nach Anspruch 6, bei dem Q in einer Konzentration von wenigstens etwa 6 Mol-% vorhanden ist.

18. Verfahren nach Anspruch 6, bei dem Q in einer Konzentration von wenigstens etwa 4 bis 8 Mol-% vorhanden ist.

19. Verfahren nach Anspruch 6, bei dem Q in einer Konzentration von wenigstens etwa 2 bis 10 Mol-% vorhanden ist.

20. Verfahren nach Anspruch 1, bei dem die Isomerisierung bei einer Temperatur zwischen etwa 100 ° und 250 °C durchgeführt wird.

21. Verfahren nach Anspruch 5, bei dem die Isomerisierung bei einer Temperatur zwischen etwa 100 ° und 250 °C durchgeführt wird.

22. Verfahren nach Anspruch 6, bei dem die Isomerisierung bei einer Temperatur zwischen etwa 100 ° und 250 °C durchgeführt wird.

23. Verfahren nach Anspruch 6, bei dem die Isomerisierung in N,N-Dimethylformamid, Toluol, Xylol, ortho-Dichlorbenzol oder Methylethylketon durchgeführt wird.

24. Verfahren nach Anspruch 23, bei dem die Isomerisierung in Xylol durchgeführt wird.

25. Verfahren nach Anspruch 1, bei dem das Isomerisierungsmittel der Formel III in situ in dem Reaktionsgemisch gebildet wird, indem zunächst eine Verbindung der Formeln IV, V oder VI, die von der Verbindung der Formel III 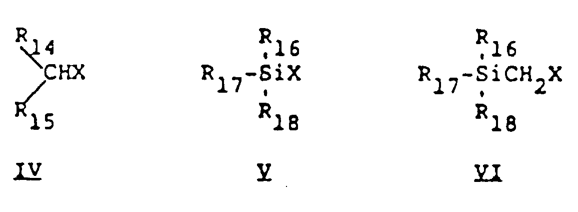 verschieden ist, in das Reaktionsmedium eingebracht wird, worin
R₁₄ und R₁₅ unabhängig für H, C₁-C₆-Alkyl, C₂-C₆-Alkylcarbonyl, C₂-C₆-Alkoxycarbonyl, 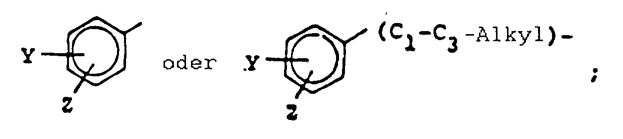 stehen;
R₁₆, R₁₇ und R₁₈ unabhängig für C₁-C₆-Alkyl, 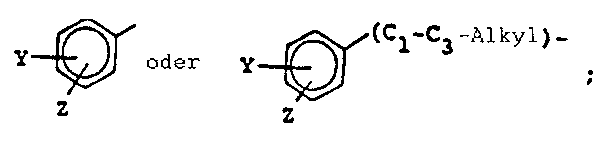 stehen;
Y und Z unabhängig für H, F, Cl, Br, I, C₁-C₃-Alkyl, C₁-C₃-Halogenalkyl, C₁-C₃-Alkoxy, C₁-C₃-Halogenalkoxy, C₁-C₃-Alkyl-S(O)ₘ, C₁-C₃-Halogenalkyl-S(O)ₘ, NO₂, CN oder Phenyl stehen; und
m für 0, 1 oder 2 steht.

26. Verfahren nach Anspruch 5, bei dem das Isomerisierungsmittel der Formel III in situ in dem Reaktionsgemisch gebildet wird, indem zunächst eine Verbindung der Formel 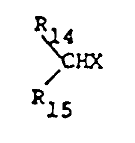 die sich von der Verbindung der Formel III unterscheidet in das Reaktionsgemisch eingebracht wird.

27. Verfahren nach Anspruch 5, bei dem das Isomerisierungsmittel der Formel III in situ in dem Reaktionsgemisch gebildet wird, indem zunächst eine Verbindung der Formel 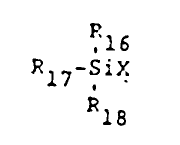 die sich von der Verbindung der Formel III unterscheidet, in das Reaktionsmedium eingebracht wird.

28. Verfahren nach Anspruch 5, bei dem das Isomerisierungsmittel der Formel III in situ in dem Reaktionsgemisch gebildet wird, indem zunächst eine Verbindung der Formel 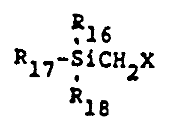 die sich von der Verbindung der Formel III unterscheidet, in das Reaktionsmedium eingebracht wird.

29. Verfahren nach Anspruch 26, bei dem Q für Q₁ steht.

30. Verfahren nach Anspruch 27, bei dem Q für Q₁ steht.

31. Verfahren nach Anspruch 28, bei dem Q für Q₁ steht.

## Revendications

1. Un procédé consistant à isomériser un 4H-1,2,4-triazole symétrique de Formule I en un 1H-1,2,4-triazole asymétrique de Formule II en présence d'un agent d'isomérisation de Formule III 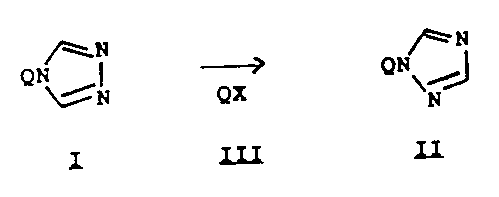 où
Q est un radical facultativement substitué ayant jusqu'à environ 35 atomes de carbone, lié au triazole ou à X par un atome de carbone ; et
X est Cl, Br ou I ;
à condition que
(a) l'atome de carbone de Q lié à l'atome d'azote du triazole ou à X soit totalement saturé et soit substitué par au moins un atome d'hydrogène ;
(b) les hétéroatomes substituants sur l'atome de carbone de Q lié à l'atome d'azote du triazole ou à X soient limités à un radical d'oxygène formant une liaison éther ou à un radical de silicium ;
(c) si un substituant de l'atome de carbone de Q lié à l'atome d'azote du triazole ou à X est un radical d'oxygène, alors l'autre substituant de l'atome de carbone de Q lié à l'atome d'azote du triazole ou à X soit lié audit atome de carbone au moyen d'un groupe carbonyle ; et
(d) les substituants sur le radical de silicium soient liés au silicium au moyen d'oxygène ou de carbone.

2. Le procédé de la revendication 1, où Q est 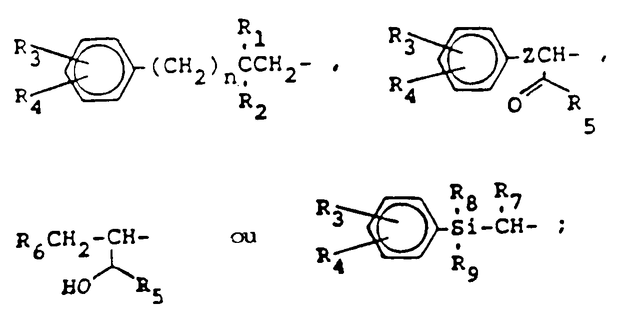
R₁ est un groupe alkyle en C₁-C₄, OR₁₁ ou CN ;
R₂ est H, un groupe alkyle en C₁-C₄, cycloalkyle en C₃-C₆, cycloalkylalkyle en C₄-C₆, 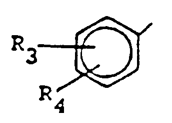 ou bien R₁ et R₂ pris ensemble peuvent être un pont cétal 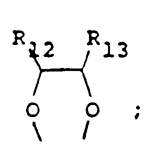
R₃ est un halogène ou un groupe phényle ;
R₄ est H ou un halogène ;
R₅ est un groupe alkyle en C₁-C₄ ;
R₆ est un groupe alkylcarbonyle en C₅-C₇ ou 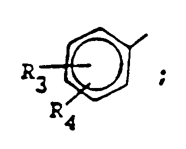
R₇ est H ou CH₃ ;
R₈ et R₉ sont indépendamment un groupe alkyle en C₁-C₄, 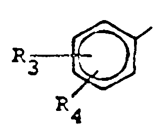 ou OR₁₀ ;
R₁₀ est H ou un groupe alkyle en C₁-C₄ ;
R₁₁ est H, un groupe alkyle en C₁-C₄ ou alcényle en C₂-C₄ ;
R₁₂ et R₁₃ sont indépendamment H ou un groupe alkyle en C₁-C₄ ;
n est 0, 1 ou 2 ; et
Z est O ou CH₂.

3. Le procédé de la revendication 1, où le radical Q n'est pas substitué par un groupe hydroxyle.

4. Le procédé de la revendication 1, où l'atome de carbone de Q lié à l'atome d'azote du triazole ou à X est substitué par au moins deux atomes d'hydrogène.

5. Le procédé de la revendication 1, où
Q est

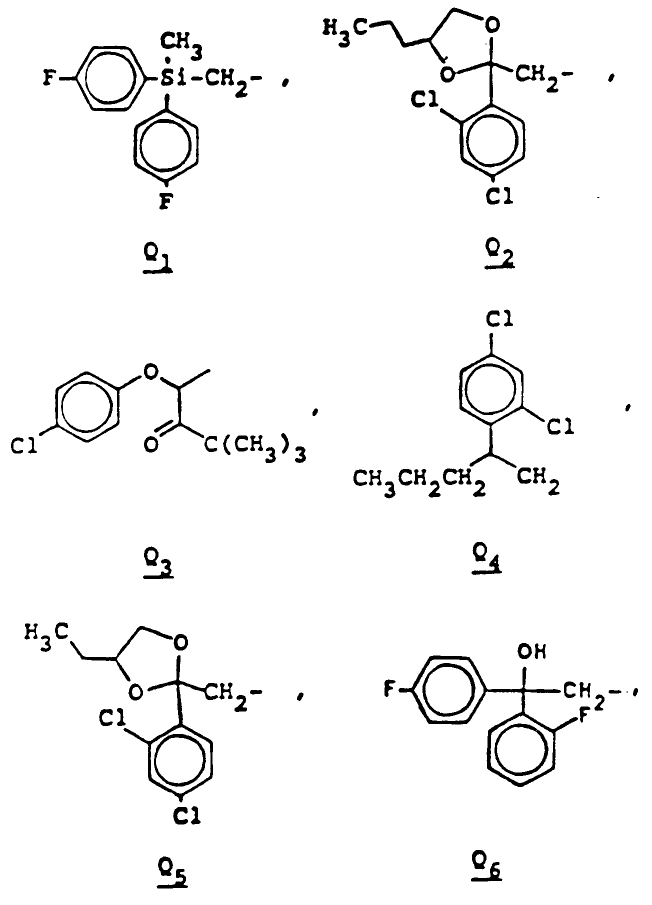

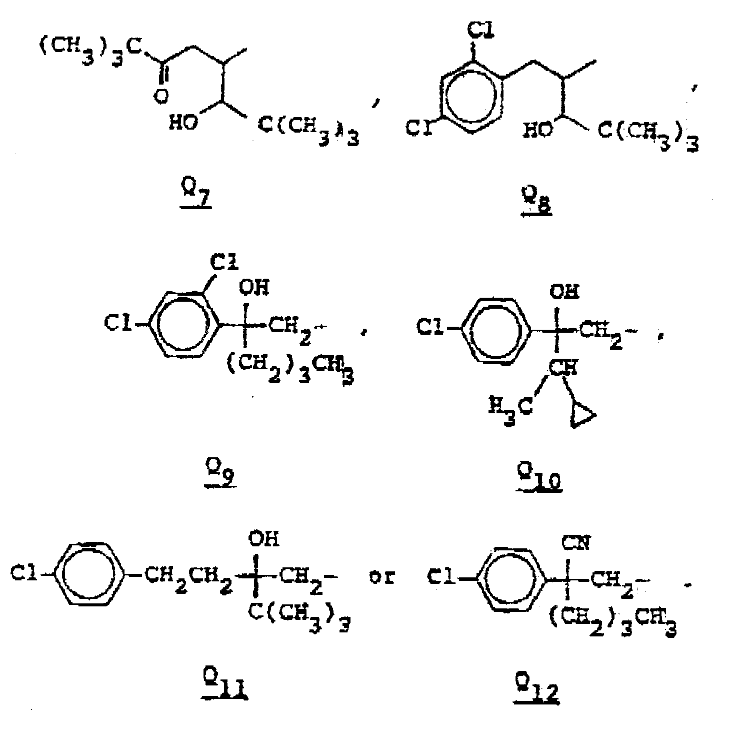

6. Le procédé de la revendication 5, où Q est Q₁.

7. Le procédé de la revendication 1, où X est Br ou I.

8. Le procédé de la revendication 5, où X est Br ou I.

9. Le procédé de la revendication 6, où X est Br ou I.

10. Le procédé de la revendication 9, où X est I.

11. Le procédé de la revendication 1, où la concentration de QX est d'au moins environ 6 moles %.

12. Le procédé de la revendication 1, où la concentration de QX est d'au moins environ 4 à 8 moles %.

13. Le procédé de la revendication 1, où la concentration de QX est d'au moins environ 2 à 10 moles %.

14. Le procédé de la revendication 5, où la concentration de Q est d'au moins environ 6 moles %.

15. Le procédé de la revendication 5, où la concentration de Q est d'au moins environ 4 à 8 moles %.

16. Le procédé de la revendication 5, où la concentration de Q est d'au moins environ 2 à 10 moles %.

17. Le procédé de la revendication 6, où la concentration de Q est d'au moins environ 6 moles %.

18. Le procédé de la revendication 6, où la concentration de Q est d'au moins environ 4 à 8 moles %.

19. Le procédé de la revendication 6, où la concentration de Q est d'au moins environ 2 à 10 moles %.

20. Le procédé de la revendication 1, où l'isomérisation est conduite à une température d'environ 100° à 250°C.

21. Le procédé de la revendication 5, où l'isomérisation est conduite à une température d'environ 100° à 250°C.

22. Le procédé de la revendication 6, où l'isomérisation est conduite à une température d'environ 100° à 250°C.

23. Le procédé de la revendication 6, où l'isomérisation est conduite dans le N,N-diméthylformamide, le toluène, le xylène, l'*ortho*-dichlorobenzène ou la méthyléthylcétone.

24. Le procédé de la revendication 23, où l'isomérisation est conduite dans le xylène.

25. Le procédé de la revendication 1, où l'agent d'isomérisation de Formule III est formé *in situ* dans le mélange réactionnel en introduisant initialement dans le milieu réactionnel un composé de la Formule IV, V ou VI, différent du composé de Formule III 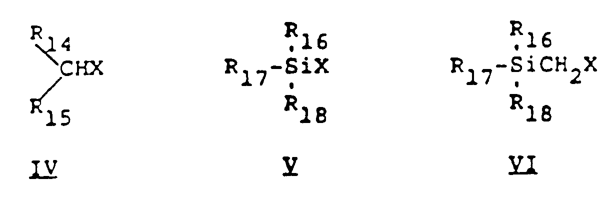 où
R₁₄ et R₁₅ sont indépendamment H, un groupe alkyle en C₁-C₆, alkylcarbonyle en C₂-C₆, alcoxycarbonyle en C₂-C₆, 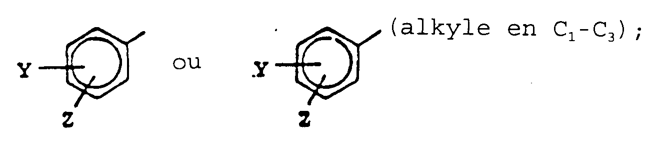
R₁₆, R₁₇ et R₁₈ sont indépendamment un groupe alkyle en C₁-C₆, 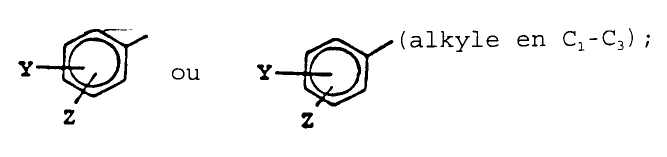
Y et Z sont indépendamment H, F, Cl, Br, I, un groupe alkyle en C₁-C₃, halogénalkyle en C₁-C₃, alcoxy en C₁-C₃, halogénalcoxy en C₁-C₃, (alkyle en C₁-C₃)-S(O)ₘ, (halogénalkyle en C₁-C₃)-S(O)ₘ, NO₂, CN ou phényle ; et
m est 0, 1 ou 2.

26. Le procédé de la revendication 5, où l'agent d'isomérisation de Formule III est formé *in situ* dans le mélange réactionnel en introduisant initialement dans le milieu réactionnel un composé de la formule 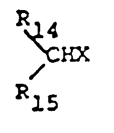 différent du composé de Formule III.

27. Le procédé de la revendication 5, où l'agent d'isomérisation de Formule III est formé *in situ* dans le mélange réactionnel en introduisant initialement dans le milieu réactionnel un composé de la formule 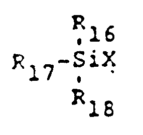 différent du composé de Formule III.

28. Le procédé de la revendication 5, où l'agent d'isomérisation de Formule III est formé *in situ* dans le mélange réactionnel en introduisant initialement dans le milieu réactionnel un composé de la formule 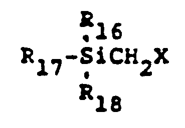 différent du composé de Formule III.

29. Le procédé de la revendication 26, où Q est Q₁.

30. Le procédé de la revendication 27, où Q est Q₁.

31. Le procédé de la revendication 28, où Q est Q₁.
